(19) **Europäisches Patentamt**

**European Patent Office**

**Office européen des brevets**

(11) **EP 1 478 126 A1**

(12) **EUROPEAN PATENT APPLICATION**

(43) Date of publication:
**17.11.2004 Bulletin 2004/47**

(51) Int Cl.⁷: **H04L 12/26**

(21) Application number: **03011223.9**

(22) Date of filing: **16.05.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** (71) Applicant: **SIEMENS AKTIENGESELLSCHAFT 80333 München (DE)** | (72) Inventors: • **Delanghe, Rony** 8300 Knokke-Heist (BE) • **Van Daele, Karel** 9090 Melle (BE) |

(54) **Real time monitoring of measured data for telecommunications systems**

(57) The invention relates to a method for monitoring a complex system, in particular a telecommunications system or network. According to the present method, a measured object is defined as constituent of the complex system. An operation parameter (OpPar) related to the operation of this measured object is identified. At least one data item related to the said operation parameter (OpPar) is periodically measured. A plurality of parameters (PoP) for said operation parameter (OpPar) is defined on the basis of instantaneous and averaged values of said operation parameter (OpPar), which are determined for each cycle of measurement. The plurality of parameters (PoP) may be given by an instantaneous value (intval), an average value with the average taken over the measurement cycle (avgval), a reference value (refval) representing an average taken over a number of cycles, and a variance value (varval). The present method keeps the balance between limiting the amount of data collected or determined so that real time processing is feasible and providing for sufficient information for efficient monitoring.

# FIG 1

EP 1 478 126 A1

**Description**

The invention relates to a method for monitoring a complex system, in particular a telecommunications system or network.

Many complex technical systems need to be monitored under certain constraints, such as providing a manageable amount of information needed for real time control of the system. Telecommunications systems and networks are prominent examples for complex systems that generate a large amount of data. There are sophisticated statistical methods for processing this large amount of data, e.g. in order to analyse performance parameters. Frequently, the time dependency of measured data needs to be taken into account to provide for instantaneous correction of errors or countermeasures against overload or failure of components. In addition, measured data are often needed for other functional entities like charging.

Common statistical methods and expert systems for analysing and processing data from complex systems do not allow for a data treatment that is concurrent with the operation of the system due to limited computing resources.

There is a trade off between the handling and processing of a large amount of data and real time requirements for operations on collected data.

The present invention's objective is to propose an efficient method for monitoring complex systems, in particular telecommunications systems and networks, in real time.

The present invention proposes following approach for monitoring a complex system. One or more measured objects are defined; the behaviour of these objects is indicative for the processing of the complex system. For a telecommunications system or a telecommunications network, the measured object may e.g. be an individual port, a plurality of ports, a plurality of logical destinations, or a more complex physical entity, such as a switching exchange.

For these measured objects, an operation parameter is chosen, which is indicative for the behaviour of the measured object. The operation parameter is characterized by at least one data item, such as the occupancy of a trunk group, the average jitter for an IP (internet Protocol) connection, the number of instances where all trunks serviced by an exchange are busy.

The measurement of each data item is carried out by the periodical registration of a plurality of parameters, consisting of an instantaneous value for one measurement cycle, an average value with the average continuously recalculated over the last measurement cycles, a reference value representing an average which is only recalculated after a number of cycles and a variance value, indicating the increasing or decreasing tendency of the reference value..

These four parameters are registered for each cycle of measurement. The period of time during which the measurements for an individual cycle is carried through may be regarded as a time slot. Seen from this angle, the measurements are conducted during consecutive time slots.

The present invention provides a flexible method for real time monitoring of complex systems. The choice of the measured object and the selection of the data items to be measured can be made dependent on the available resources. Thus the amount of data to be treated can be kept tractable such that real time processing, i.e. the instantaneous monitoring of the evolution of the operation parameters is possible. The selection of the data items to be measured can be made in view of critical components or processes within the complex system, of performance issues or further utilisation of the determined parameters.

In the event of monitoring a telecommunications system or telecommunications network, the determined parameters can be used for flexible charging of the customers. For instance, the degree of utilisation of the telecommunications system or network can be monitored and the charging may then be related to this degree of utilisation. The operation parameter and the measurement cycles may be chosen with respect to network management issues, such as instantaneous countermeasures against overload or failures of components.

The degree of utilisation may also pertain to the frequency required to monitor critical parameters. In periods of high utilisation, the system needs to be checked for a system overload more frequently than in periods of low utilisation. For many systems, it is sensible to take or calculate said parameters separately for work days and for bank holidays and weekends as the degree of utilisation is lower on bank holidays and weekends.

More general, periods of time may be identified when the load of the system essentially falls into a given range. The frequency of the measurement of data can then be selected subject to the periods of time. Thus, the measurement cycles may e.g. be decomposed in day and night cycles where a lower frequency of measurement is applied at night. Similarly, data may be measured with a different periodicity for work days and for bank holidays and weekends.

An embodiment of the invention is presented below. The description of the embodiment makes use of the following figures:

Fig. 1 is a schematic diagram illustrating present method

Fig. 2 shows two curves used for predicting the evolution of a measured data item

In the following, it is assumed that the complex system is given by two telephone exchanges connected via three trunk groups. The operation parameter to be monitored is chosen to have only the traffic load between the two telephone exchanges as data item.

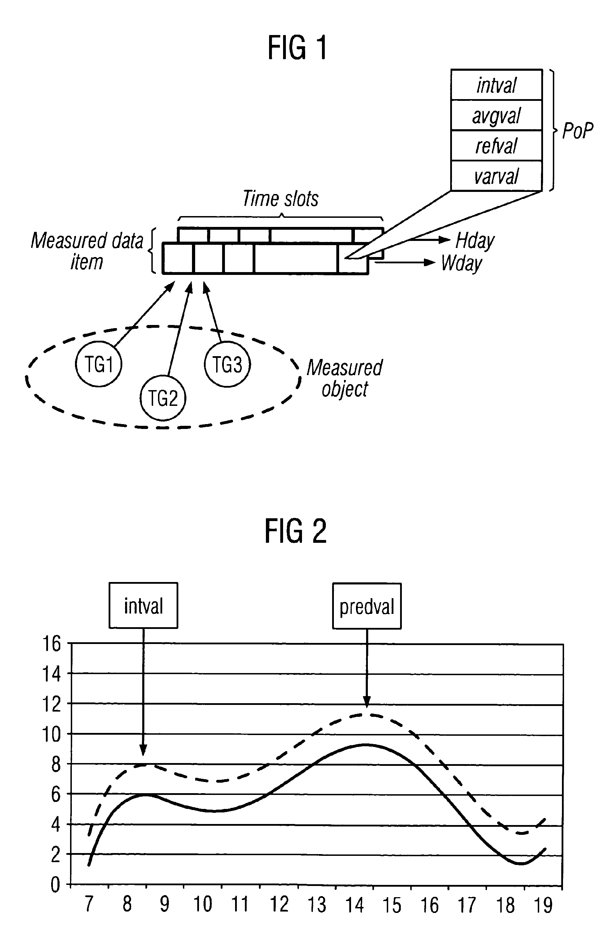

Fig. 1 shows the concept according to the present invention. The traffic load on all three trunk groups TG1, TG2 and TG3 is measured periodically. The operation parameter OpPar for the measured object comprises as only data item the total traffic load, i.e. the sum over the three trunk groups TG1, TG2 and TG3.

The measurements are performed for time slots of 15 minutes, i.e. 96 times a day. For each time slot TS, a set of parameters PoP (PoP: plurality of parameters) is determined, consisting of following 4 values:

- the instantaneous or actual value intVal, measured at the end of the measurement period,
- an average value avgval, which is continuously calculated based on the measured data,
- a reference value refval, which is an average previously calculated over several measurement periods, and
- a variance value varval, indicating whether the reference value shows a tendency to increase or to decrease.

Separate sets of parameters are recorded for weekdays Wday and for holidays Hday.

The reference value provides a typical pattern for the evolution of the measured data item, and hence for the monitored operation parameter over one day. It can be used to make predictions and can also serve as a base for differentiated charging models.

For instance, a company could be charged according to the average quality of service it is provided during the working hours, whereas the quality of service during the night is not taken into account for charging.

Fig. 2 shows how predictions can be made. The solid line shows the pattern of the reference values for one particular measured data item (e.g. trunk group occupancy) during one day. When on one particular day, the actual values intval determined or measured during the first working hours overshoot the reference values by a certain amount, the trend can be expected to be visible throughout the day (dashed line). Thus, an estimation of the maximum value predval, which will be reached in the late afternoon, can be made.

The fact that average values are continuously measured, and hence are almost directly available, avoids the need for a complex postprocessing of raw data, which is very often an impediment to the employment of differentiated charging models in an IP (Internet Protocol) environment.

The average value is continuously determined in the following way. Assuming that a, b, c, d, .. are instantaneous values:

$$average_1 = \frac{a + b}{2}$$

$$average_2 = \frac{average_1 + c}{3}$$

$$average_3 = \frac{average_2 + d}{4}$$

The average value is determined in the above way for N measurement periods. A way to choose N will be presented below.

The reference value is the average value for the previous N measurement periods. After the calculation of average values for one series of N measurement periods is finished, the resulting value is stored as reference value, replacing the previous stored one. These reference values can be used to make predictions and to implement charging models. By calculating reference values, fluctuations of the instantaneous values are suppressed that are not relevant on the time scale used for predictions.

The value N can be determined in the following way:

A starting value is chosen, which corresponds to an initial filter applied to measured data. In order to have a statistical meaningful result, a minimum value of 5 is assumed.

Consecutively, the value of N is increased subject to the following rules:

In case the newly calculated average differs to a great extent from the previous one, and the variance remains small, the value of N is increased by 1. The assumption is that the current value of N is too small for a realistic average value.

The comparison between the newly calculated average value and the previous one is done by calculating the relative increase

$$\frac{new\_average\_value\text{-}old\_average\_value}{old\_average\_value}$$

and to compare it with a reference value D. 0.1 is taken as default value for D.

The variance value is determined by first counting the number of times the newly calculated average value is greater than the previous value (P) and by counting the number of times the newly calculated average value is smaller than the previous value (*M*). When at least 5 such comparisons have been performed, the variance value is fixed at

$$abs(1\text{-}\frac{P}{M})$$

where M is assumed to be different from zero.

This value is compared with a reference value V, which has as default value 0.5. When M equals zero, the variance is a priori greater than this value, so no calculation is necessary.

A variance less than V is considered to be a small value.

After the value of N is increased, P and M are reset to zero.

The value of N may be reset to the default value, when the newly calculated average differs to a very great extent from the previous one. This is the case when

$$abs(\frac{new\_average\_value\_old\_average\_value}{old\_average\_value}) > 10 * D$$

The underlying idea is that in case a sudden change in the behavior of the measured data occurred, the value of N has to be small in order to follow this change.

The invention is not limited to the above example. The present method involves no complex manipulation of data, the output is easily interpretable and the memory requirements have been kept moderate. Hence, the method can be used for monitoring all kinds of systems with real time processing of data. It can be easily adjusted to meet requirements that are specific to individual systems.

**Claims**

1. A method for monitoring a complex system, in particular a telecommunications system or network, comprising the steps of

   - identifying a measured object, as constituent of the complex system,
   - identifying an operation parameter (OpPar) related to the operation of the said measured object,
   - periodically measuring at least one data item related to said operation parameter (OpPar),
   - defining a plurality of parameters (PoP) for said data item based on instantaneous and averaged values of said said data item, and
   - determining said plurality of parameters (PoP) for each cycle of measurement.

2. A method as recited in claim 1, wherein the said plurality of parameters (PoP) comprises

   - an instantaneous value (intval),
   - an average value with the average taken over the measurement cycle (avgval),
   - a reference value (refval) representing an average taken over a number of cycles, and
   - a variance value (varval).

3. A method as recited in claim 1 or 2, wherein

   - said parameters are determined separately for workdays (Wday) and for bank holidays and weekends (Hday).

4. A method as recited in one of the claims 1 to 3, further comprising the steps of

   - identifying periods of time according to the load of the complex system, and
   - choosing the periodicity for the measurement of data subject to said periods of time.

**5.** A method as recited in one of the claims 1 to 4, further comprising

- measuring data with a different periodicity for work days (Wday) and for bank holidays and weekends (Hday).

**6.** A method as recited in one of the claims 1 to 5, wherein

- the complex system is a telecommunications system or telecommunications network,
- the charging rate for using the telecommunications system or telecommunications network is fixed subject to values of said plurality of parameters (PoP).

# FIG 1

# FIG 2

**European Patent Office**

**EUROPEAN SEARCH REPORT**

Application Number

EP 03 01 1223

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/018450 A1 (CARLEY STEPHEN) 23 January 2003 (2003-01-23) * paragraph [0028] - paragraph [0032] * * paragraph [0033] - paragraph [0035] * * paragraph [0040] * * paragraph [0070] * * claims 10,18 * --- | 1-6 | H04L12/26 |
| A | US 6 021 117 A (JUNIPER ANDREW ET AL) 1 February 2000 (2000-02-01) * column 2, line 14 - line 23 * * column 9, line 15 - line 17 * * column 10, line 33 - line 54 * * column 72, line 28 - line 30 * --- | 2 | |
| A | US 2002/143494 A1 (CONRAD JEFF) 3 October 2002 (2002-10-03) * abstract * * paragraph [0010] - paragraph [0013] * * paragraph [0039] * --- | 3,4 | |
| A | EP 0 613 270 A (HEWLETT PACKARD CO) 31 August 1994 (1994-08-31) * abstract * * claim 1 * --- | 5 | TECHNICAL FIELDS SEARCHED (Int.Cl.7) H04L |
| A | US 2002/099848 A1 (LEE HOON) 25 July 2002 (2002-07-25) * abstract * * claim 1; figure 2 * ----- | 6 | |

The present search report has been drawn up for all claims

| Place of search | Date of completion of the search | Examiner |
|---|---|---|
| THE HAGUE | 2 September 2003 | Ciurel, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 478 126 A1**

## ANNEX TO THE EUROPEAN SEARCH REPORT
## ON EUROPEAN PATENT APPLICATION NO.

EP 03 01 1223

02-09-2003

| Patent document cited in search report | | Publication date | Patent family member(s) | | Publication date |
|---|---|---|---|---|---|
| US 2003018450 | A1 | 23-01-2003 | WO | 03009162 A1 | 30-01-2003 |
| US 6021117 | A | 01-02-2000 | IL | 117366 A | 09-05-1999 |
| | | | AU | 1809897 A | 10-10-1997 |
| | | | EP | 0958679 A1 | 24-11-1999 |
| | | | WO | 9735405 A1 | 25-09-1997 |
| | | | JP | 2001503927 T | 21-03-2001 |
| US 2002143494 | A1 | 03-10-2002 | NONE | | |
| EP 0613270 | A | 31-08-1994 | DE | 69422436 D1 | 10-02-2000 |
| | | | DE | 69422436 T2 | 12-10-2000 |
| | | | EP | 0613270 A2 | 31-08-1994 |
| | | | JP | 7007518 A | 10-01-1995 |
| | | | US | 5539659 A | 23-07-1996 |
| US 2002099848 | A1 | 25-07-2002 | KR | 2002044201 A | 15-06-2002 |
| | | | JP | 2002198959 A | 12-07-2002 |